# EUROPÄISCHE PATENTSCHRIFT

(11) **EP 0 916 860 B1**
(45) Veröffentlichungstag und Bekanntmachung des Hinweises auf die Patenterteilung: **14.11.2001**
(21) Anmeldenummer: 98118415.3
(22) Anmeldetag: 29.09.1998
(51) Int. Cl.: F16C 29/04, F16C 13/00

(54) **Linearlageranordnung**
Linear motion bearing assembly
Agencement de palier linéaire

(30) Priorität: 13.11.1997 DE 19750126
(43) Veröffentlichungstag der Anmeldung: 19.05.1999
(73) Patentinhaber: INA Wälzlager Schaeffler oHG, 91072 Herzogenaurach (DE)
(72) Erfinder: Brunk, Michael, 66773 Schwalbach (DE); Kleber, Rainer, 66280 Sulzbach (DE)

(56) Entgegenhaltungen:
- EP-A- 0 394 186
- EP-A- 0 517 684
- EP-A- 0 628 739
- DE-A- 3 829 276
- DE-A- 4 118 627
- DE-U- 8 905 064

## Beschreibung

### Gebiet der Erfindung

Die Erfindung betrifft eine Linearlageranordnung mit einer Führungsschiene, einem Tragkörper und mindestens einem Paar von Laufrollen, die jeweils als an der Führungsschiene seitlich abgestützte Lageraußenringe von Wälzlagern ausgebildet sind, deren Wälzkörper sich zwischen den Laufrollen und an dem Tragkörper befestigten Lagerinnenringen befinden, wobei zur Befestigung Schrauben durch die Lagerinnenringe hindurchgesteckt und in Gewindebohrungen des Tragkörpers eingeschraubt sind.

### Hintergrund der Erfindung

Eine solche Lageranordnung ist aus der DE-OS 38 29 276 bekannt. Damit hier die an dem Tragkörper gelagerten Laufrollen mit einer bestimmten Vorspannung gegen die Führungsschiene gedrückt werden, ist zwischen einer Schraube und dem Lagerinnenring des Wälzlagers, welches die Laufrolle enthält, mindestens ein radial federelastisches Element, beispielsweise ein Rundschnurring aus Gummi angeordnet. Um das federelastische Element in den von dem Lagerinnenring und der Schraube gebildeten Spalt einführen zu können, ist hier jedoch als Halterungsmaßnahme die Anbringung einer Umfangsnut an der Schraube erforderlich. Bei diesem Linearlager genügen also für die Befestigung der Wälzlager an dem Tragkörper übliche, serienmäßig hergestellte Schrauben nicht. Auch eine aus dem DE-GM 89 05 064 bekannte Linearlageranordnung weist diesen Nachteil auf, da dort die Schrauben auf einem Teil ihrer Länge mit exzentrischen Schaftbereichen versehen sein müssen.

In der im April 1997 erschienenen Druckschrift "LIF Linearführungen, Profilschienenführungen, Laufrollenführungen, Wellenführungen" der Firma INA Lineartechnik oHG, 66406 Homburg (Saar) ist auf Seite 213 eine Linearlageranordnung veröffentlicht, bei welcher der Laufwagen oder Tragkörper auf der Führungsschiene spielfrei läuft. Die Laufrollen sind hier so genau an dem als Wagenplatte ausgebildeten Tragkörper positioniert, daß auf eine teuere und zeitaufwendige Spieleinstellung über Exzenterzapfen verzichtet werden kann. Die Positionierung jeder Laufrolle erfolgt über einen Zapfen, der über die axiale Länge der Laufrolle hinausragt und sich in einer Paßbohrung der Wagenplatte zentriert. Diese Ausführung hat jedoch den Nachteil, daß die zentrischen Zapfen teuere Sonderausführungen sind, da sie durch Drehen hergestellt werden müssen.

### Zusammenfassung der Erfindung

Der Erfindung liegt die Aufgabe zugrunde, unter Verwendung preiswerter Bauteile eine Lageranordnung zu schaffen, bei welcher Laufrollen in einfacher Weise an einem Tragkörper befestigt und spielfrei an der Führungsschiene angestellt werden können.

Diese Aufgabe wird erfindungsgemäß dadurch gelöst, daß an jedem Lagerinnenring an einer Stirnseite angrenzend ein den Lagerinnenring zentrierender Zentrierring befestigt ist, welcher in eine mit der jeweiligen Gewindebohrung koaxiale Paßbohrung des Tragkörpers eingesteckt ist. Die Innenringe der Laufrollen werden also nach einer Seite hin verlängert. Der Außendurchmesser des verlängerten Innenringes zentriert sich direkt in dem als Wagenplatte ausgebildeten Tragkörper und stützt sich gegen radial wirkende Kräfte ab. Axial wird jede Laufrolle über eine handelsübliche genormte Schraube gehalten. Es kann also auf teuere, besonders hergestellte Zapfen verzichtet werden, weil kostengünstige Normschrauben verwendet werden können. Ein weiterer Vorteil besteht in der Erleichterung der Montage.

Die Innendurchmesser des Zentrierringes und des Lagerinnenringes können gleich sein. Das bietet sich insbesondere dann an, wenn der Lagerinnenring und der Zentrierring als einstückiges Bauteil ausgeführt sind.

### Kurze Beschreibung der Zeichnung

Ausführungsbeispiele der Erfindung sind in der Zeichnung dargestellt und werden im folgenden näher beschrieben. Es zeigen
- Figur 1: eine Linearlageranordnung im Querschnitt nach dem Stand der Technik;
- Figur 2: den fertig montierten Tragkörper einer erfindungsgemäßen Linearlageranordnung in stirnseitiger Ansicht und teilweise im Querschnitt;
- Figur 3: eine Draufsicht auf den Tragkörper gemäß Figur 2;
- Figur 4: eine wälzgelagerte Laufrolle mit einem erfindungsgemäßen Zentrierring in vergrößerter Schnittdarstellung.

### Ausführliche Beschreibung der Zeichnung

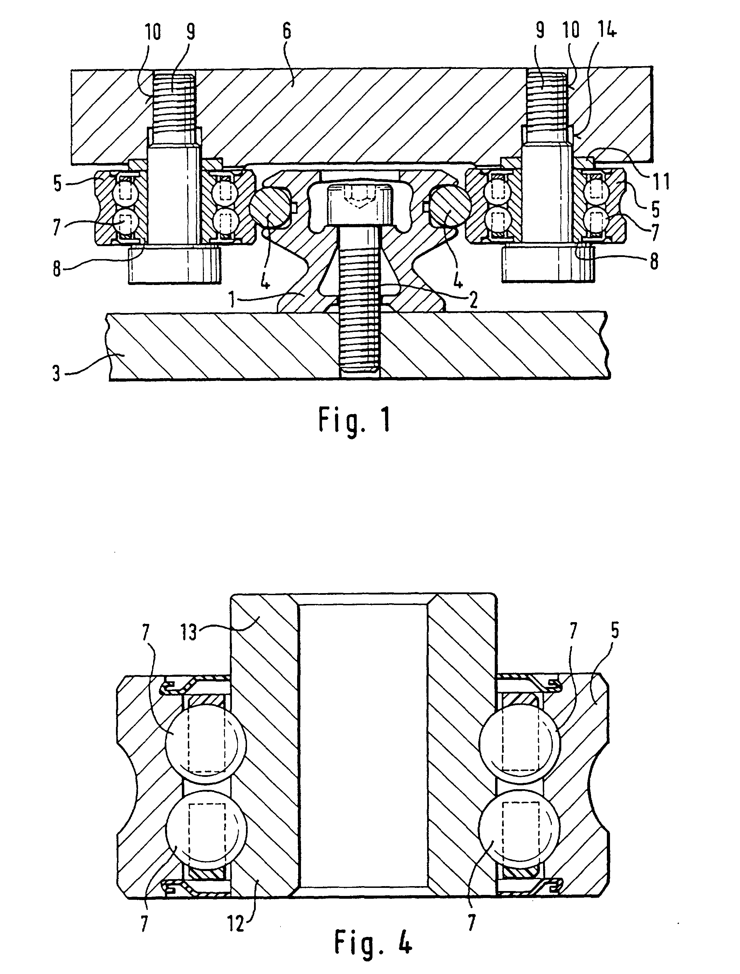

Eine vorbekannte Linearlageranordnung enthält in Figur 1 eine Führungsschiene 1, die mit Schrauben 2 an einem Maschinengestell 3 befestigt ist. Die Führungsschiene 1 besteht vorzugsweise aus einem metallischen Träger, beispielsweise aus einer Aluminiumlegierung, wobei sich an den Längsseiten des Trägers in Nuten Laufschienen 4 aus Stahl befinden.

An jeder Laufschiene 4 ist eine Laufrolle 5 abgestützt, die als Lageraußenring eines Wälzlagers ausgebildet ist. Die Wälzlager sind vorzugsweise paarweise zu beiden Seiten der Führungsschiene 1 angeordnet und dienen zur Halterung eines oberhalb der Führungsschiene 1 in deren Längsrichtung verfahrbaren Tragkörpers 6.

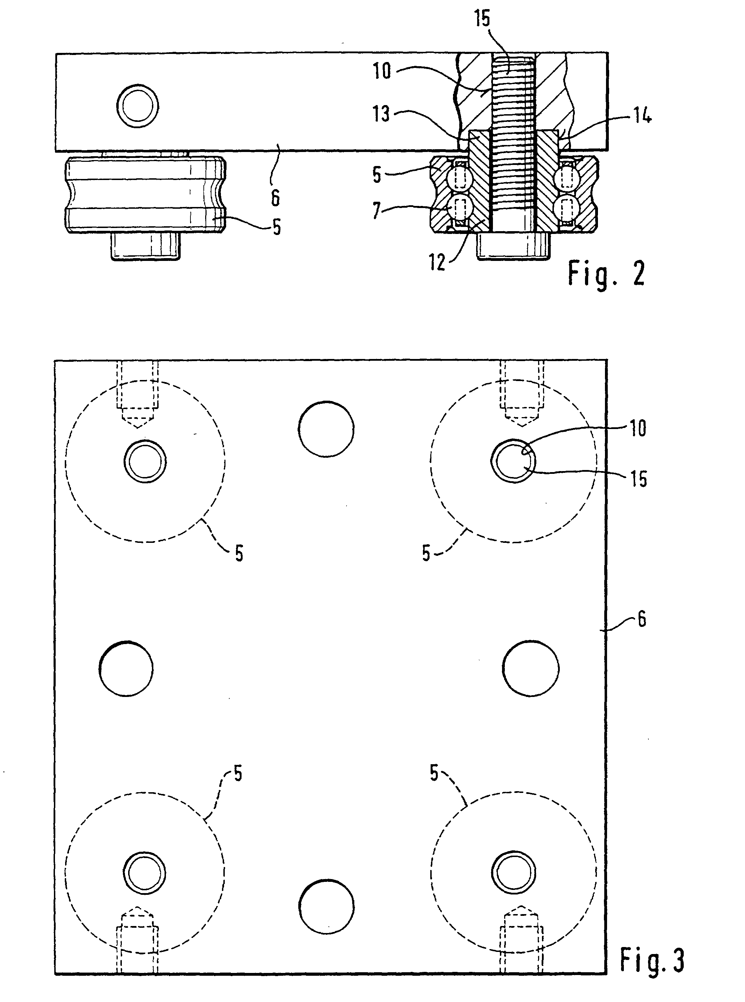

An jedem Wälzlager befinden sich Wälzkörper 7 zwischen der Laufrolle 5 und einem Lagerinnenring 8. In den Ausführungsbeispielen sind die Wälzkörper 7 Kugeln. Es sind aber auch Ausführungsbeispiele mit Rollen oder Nadeln als Wälzkörper denkbar. Der Lagerinnenring 8 ist jeweils mit Hilfe eines durchgesteckten zentrischen Zapfens 9, der ein Gewindeende aufweist und mit diesem in eine Gewindebohrung 10 des Tragkörpers 6 eingeschraubt ist, an dem Tragkörper befestigt. Dabei ist jeweils zwischen dem Lagerinnenring 8 und dem Tragkörper 6 ein Distanzring 11 mit einem dem Durchmesser des zentrischen Zapfens 9 entsprechenden inneren Ringdurchmesser angeordnet. Wie Figur 3 zeigt, kann der Tragkörper 6 über zwei Paare von Wälzlagern mit Laufrollen 5 an der Führungsschiene 1 gelagert sein.

Von der vorbekannten Linearlageranordnung unterscheidet sich die in den Figuren 2 bis 4 dargestellte Erfindung dadurch, daß an jedem Lagerinnenring 12 an einer Stirnseite ein Zentrierring 13 angrenzt und dort befestigt ist. Im Ausführungsbeispiel sind der Lagerinnenring 12 und der Zentrierring 13 als einstückiges Bauteil ausgeführt.

Der Zentrierring 13 ist in eine Paßbohrung 14 des Tragkörpers 6 eingesteckt und kann daher am Wälzlager auftretende Kräfte und Momente radial auf den Tragkörper 6 übertragen. Axial wird das aus dem Lagerinnenring 12 und dem Zentrierring 13 bestehende Bauteil dort mit einer Schraube 15 gehalten, die in die Gewindebohrung 10 des Tragkörpers 6 eingeschraubt ist und deren Kopf sich an der von dem Tragkörper 6 abgewandten Stirnseite des Lagerinnenringes 12 abstützt. Hierfür kann eine handelsübliche genormte Schraube verwendet werden.

### Bezugszeichenliste

- 1: Führungsschiene
- 2: Schraube
- 3: Maschinengestell
- 4: Laufschiene
- 5: Laufrolle
- 6: Tragkörper
- 7: Wälzkörper
- 8: Lagerinnenring
- 9: zentrischer Zapfen
- 10: Gewindebohrung
- 11: Distanzring
- 12: Lagerinnenring
- 13: Zentrierring
- 14: Paßbohrung
- 15: Schraube

## Patentansprüche

1. Linearlageranordnung mit einer Führungsschiene (1), einem Tragkörper (6) und mindestens einem Paar von Laufrollen (5), die jeweils als an der Führungsschiene (1) seitlich abgestützte Lageraußenringe von Wälzlagern ausgebildet sind, deren Wälzkörper (7) sich zwischen den Laufrollen (5) und an dem Tragkörper (6) befestigten Lagerinnenringen (12) befinden, wobei zur Befestigung Schrauben (15) durch die Lagerinnenringe (12) hindurchgesteckt und in Gewindebohrungen (10) des Tragkörpers (6) eingeschraubt sind, **dadurch gekennzeichnet, daß** an jedem Lagerinnenring (12) an einer Stirnseite angrenzend ein den Lagerinnenring zentrierender Zentrierring (13) befestigt ist, welcher in eine mit der jeweiligen Gewindebohrung (10) koaxiale Paßbohrung (14) des Tragkörpers (6) eingesteckt ist.

2. Lageranordnung nach Anspruch 1, **dadurch gekennzeichnet, daß** die Innendurchmesser des Zentrierringes (13) und des Lagerinnenringes (12) gleich groß sind.

3. Lageranordnung nach Anspruch 1, **dadurch gekennzeichnet, daß** der Lagerinnenring (12) und der Zentrierring (13) als einstückiges Bauteil ausgeführt sind.

## Claims

1. A linear bearing arrangement with a guide rail (1), a supporting body (6) and at least one pair of rollers (5), which are configured as bearing outer races of roller bearings which are supported laterally on the guide rail (1), the roller bodies (7) of which are disposed between the rollers (5) and the bearing inner races (12) attached to the supporting body (6), wherein for attachment, screws (15) are pushed through the bearing inner races (12) and screwed into threaded bores (10) of the supporting body (6), **characterised in that** a centring ring (13) which centres the bearing inner race is attached to each bearing inner race (12) adjacent to a face side, this centring ring being inserted in a fitting bore (14) of the supporting body (6) which is coaxial to the respective threaded bore (10).

2. A bearing arrangement according to claim 1, **characterised in that** the interior diameter of the centring ring (13) and the bearing inner race (12) are the same.

3. A bearing arrangement according to claim 1, **characterised in that** the bearing inner race (12) and the centring ring (13) are configured as a one-piece component.

## Revendications

1. Dispositif de palier linéaire comportant un rail de guidage (1), un support (6) et au moins une paire de galets de roulement (5) réalisé chaque fois par les bagues extérieures de palier de roulement, s'appuyant latéralement sur le rail de guidage (1) et dont les organes de roulement (7) se trouvent entre le galet de roulement (5) et la bague intérieure (12) du palier, fixée au support (6), et pour la fixation, les vis (15) sont engagées à travers la bague intérieure 12) du palier pour être vissées dans les taraudages (10) du support (6),
**caractérisé en ce qu'**
un anneau de centrage (13) est fixé sur chaque bague intérieure de palier (12), du côté d'une face frontale adjacente à la bague intérieure du palier, de manière à réaliser un centrage, et cet anneau est engagé dans un perçage ajusté (14) du support (6), co-axialement au taraudage (10).

2. Dispositif de palier selon la revendication 1,
**caractérisé en ce que**
le diamètre intérieur de l'anneau de centrage (13) et de la bague intérieure du palier (12) sont identiques.

3. Dispositif de palier selon la revendication 1,
**caractérisé en ce que**
la bague intérieure de palier (12) et l'anneau de centrage (13) sont réalisés en une seule pièce.
